(19) Europäisches Patentamt / European Patent Office / Office européen des brevets

(11) **EP 4 546 664 A1**

(12) **EUROPEAN PATENT APPLICATION**
published in accordance with Art. 153(4) EPC

(43) Date of publication:
**30.04.2025 Bulletin 2025/18**

(21) Application number: **23829728.7**

(22) Date of filing: **11.05.2023**

(51) International Patent Classification (IPC):
**H04B 10/25** (2013.01)

(52) Cooperative Patent Classification (CPC):
**H04B 10/25; H04B 17/309**

(86) International application number:
**PCT/CN2023/093571**

(87) International publication number:
**WO 2024/001542 (04.01.2024 Gazette 2024/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.06.2022 CN 202210758268**

(71) Applicant: **ZTE Corporation**
**Shenzhen, Guangdong 518057 (CN)**

(72) Inventors:
• **YAN, Baoluo**
**Shenzhen, Guangdong 518057 (CN)**
• **LU, Xiangjun**
**Shenzhen, Guangdong 518057 (CN)**
• **SHI, Hu**
**Shenzhen, Guangdong 518057 (CN)**
• **WU, Qiong**
**Shenzhen, Guangdong 518057 (CN)**

(74) Representative: **Savi, Massimiliano et al**
**Notarbartolo & Gervasi S.p.A.**
**Viale Achille Papa, 30**
**20149 Milano (IT)**

(54) **OTDR TRACE CORRECTION METHOD, ELECTRONIC DEVICE, AND STORAGE MEDIUM**

(57) Embodiments of the present application provide an OTDR trace correction method, an electronic device, and a storage medium. The method comprises: when a stimulated Raman scattering (SRS) transfer amount amplified or absorbed by an OTDR wavelength in an optical transport network (OTN) service is ignored, establishing a parametric decoupling equation according to an optical fiber loss coefficient and an SRS transfer coefficient (201); disabling an OTN service wavelength of an optical fiber transmission system, and according to the parametric decoupling equation, acquiring a first OTDR trace of an OTDR simulation wavelength in the optical fiber transmission system when the OTN service wavelength is in a disabled state (202); determining the optical fiber loss coefficient according to the first OTDR trace (203); enabling the OTN service wavelength, and according to the parametric decoupling equation, acquiring a second OTDR trace of the OTDR simulation wavelength in the optical fiber transmission system when the OTN service wavelength is in an enabled state (204); determining the SRS transfer coefficient according to the first OTDR trace and the second OTDR trace (205); and acquiring an OTDR test wavelength, and correcting an OTDR test trace of the OTDR test wavelength in the optical fiber transmission system according to the optical fiber loss coefficient and the SRS transfer coefficient (206).

EP 4 546 664 A1

**(Cont. next page)**

Step 201: Establish a parameter decoupling equation according to a fiber loss coefficient and an SRS transfer coefficient when an SRS transfer amount amplified or absorbed by an OTDR wavelength in an OTN service is ignored

Step 202: Disable a service wavelength of an OTN of an optical fiber transmission system, and acquire, according to the parameter decoupling equation, a first OTDR trace of an OTDR simulation wavelength in the optical fiber transmission system when the service wavelength of the OTN is in a disabled state

Step 203: Determine a fiber loss coefficient according to the first OTDR trace

Step 204: Enable the service wavelength of the OTN, and acquire, according to the parameter decoupling equation, a second OTDR trace of the OTDR simulation wavelength in the optical fiber transmission system when the service wavelength of the OTN is in an enabled state

Step 205: Determine the SRS transfer coefficient according to the first OTDR trace and the second OTDR trace

Step 206: Acquire an OTDR test wavelength, and correct an OTDR test trace of the OTDR test wavelength in the optical fiber transmission system according to the fiber loss coefficient and the SRS transfer coefficient

FIG. 2

**Description**

**CROSS-REFERENCE TO RELATED APPLICATION**

This application is filed on the basis of Chinese patent application No. 202210758268.6 filed June 30, 2022, and claims priority to the Chinese patent application, the entire contents of which are incorporated herein by reference.

**TECHNICAL FIELD**

The present disclosure relates to the field of optical communication and sensing, and more particularly, to an Optical Time-Domain Reflectometer (OTDR) trace correction method, an electronic device, and a storage medium.

**BACKGROUND**

An Optical Time-Domain Reflectometer (OTDR) is an instrument for testing the performance of an optical fiber. The performance of the optical fiber can be analyzed according to an OTDR trace measured by the OTDR. When the OTDR is used to test the transmission performance of an optical fiber in an Optical Transport Network (OTN), the OTDR trace may become distorted due to the Stimulated Raman Scattering (SRS) effect in the OTN, leading to inaccurate test results of the OTDR.

**SUMMARY**

The following is a summary of the subject matter set forth in this description. This summary is not intended to limit the scope of protection of the claims.

Embodiments of the present disclosure provide an OTDR trace correction method, an electronic device, and a storage medium.

In accordance with a first aspect of the present disclosure, an embodiment provides an OTDR trace correction method, including: establishing a parameter decoupling equation according to a fiber loss coefficient and an SRS transfer coefficient in response to ignoring an SRS transfer amount amplified or absorbed by an OTDR wavelength in an OTN service; disabling a service wavelength of an OTN of an optical fiber transmission system, and acquiring, according to the parameter decoupling equation, a first OTDR trace of an OTDR simulation wavelength in the optical fiber transmission system when the service wavelength of the OTN is in a disabled state; determining a fiber loss coefficient according to the first OTDR trace; enabling the service wavelength of the OTN, and acquiring, according to the parameter decoupling equation, a second OTDR trace of the OTDR simulation wavelength in the optical fiber transmission system when the service wavelength of the OTN is in an enabled state; determining the SRS transfer coefficient according to the first OTDR trace and the second OTDR trace; and acquiring an OTDR test wavelength, and correcting an OTDR test trace of the OTDR test wavelength in the optical fiber transmission system according to the fiber loss coefficient and the SRS transfer coefficient.

In accordance with a second aspect of the present disclosure, an embodiment provides an electronic device, including a memory and a processor, where the memory is configured for storing a computer program which, when executed by the processor, causes the processor to implement the method in accordance with the first aspect.

In accordance with a third aspect of the present disclosure, an embodiment provides a computer-readable storage medium, storing a program which, when executed by a processor, causes the processor to implement the method in accordance with the first aspect.

Additional features and advantages of the present disclosure will be set forth in the description which follows, and in part will be obvious from the description, or may be learned by the practice of the present disclosure. The objects and other advantages of the present disclosure can be realized and obtained by the structures particularly pointed out in the description, claims and drawings.

**BRIEF DESCRIPTION OF DRAWINGS**

The drawings are provided for a further understanding of the technical schemes of the present disclosure, and constitute a part of the description. The drawings and the embodiments of the present disclosure are used to illustrate the technical schemes of the present disclosure, but are not intended to limit the technical schemes of the present disclosure.

FIG. 1 is a schematic diagram of a layout configuration of an optical transport layer segment in an OTN according to an embodiment of the present disclosure;

FIG. 2 is a flowchart of an OTDR trace correction method according to an embodiment of the present disclosure;

FIG. 3 is a flowchart of an OTDR trace correction method according to another embodiment of the present disclosure;

FIG. 4 is a schematic diagram of an OTDR trace before and after removal of event points according to an embodiment of the present disclosure;

FIG. 5 is a schematic diagram of a power configuration of an OTN service band according to an embodiment of the present disclosure;

FIG. 6 is a diagram showing an effect of OTDR trace correction in a scenario without aging of an optical cable according to an embodiment of the present disclosure;

FIG. 7 is a diagram showing an effect of OTDR trace correction in a scenario with aging of an optical cable and with a change in OTN service power according to an embodiment of the present disclosure; and

FIG. 8 is a schematic structural diagram of an electronic device according to an embodiment of the present disclosure.

## DETAILED DESCRIPTION

To make the objects, technical schemes, and advantages of the present disclosure clear, the present disclosure is described in further detail in conjunction with accompanying drawings and embodiments. It should be understood that the specific embodiments described herein are merely used for illustrating the present disclosure, and are not intended to limit the present disclosure.

In the description of the present disclosure, it should be understood that for the description of orientations, the orientation or positional relationships indicated by the terms such as "on", "below" and the like are based on orientation or positional relationships shown in the accompanying drawings, and are used only for ease and brevity of illustration and description, rather than indicating or implying that the mentioned apparatus or element must have a particular orientation or must be constructed and operated in a particular orientation. Therefore, such terms should not be construed as limiting of the present disclosure.

It is to be noted, although functional modules have been divided in the schematic diagrams of apparatuses and logical orders have been shown in the flowcharts, in some cases, the modules may be divided in a different manner, or the steps shown or described may be executed in an order different from the orders as shown in the flowcharts. The terms such as "first", "second" and the like in the description, the claims, and the accompanying drawings are used to distinguish similar objects, and are not necessarily used to describe a specific sequence or a precedence order. In the description of the present disclosure, "multiple" and "a plurality of" mean two or more, unless otherwise particularly defined.

In the description of the present disclosure, it should be noted that unless otherwise explicitly defined, the terms such as "install/mount" and "connect" should be understood in a broad sense, and those having ordinary skills in the art can reasonably determine the specific meanings of the above terms in the present disclosure based on the specific contents of the technical scheme.

Nowadays, with the vigorous development of massive applications related to big data, the amount of data carried over OTNs has surged. Wavelength division multiplexing is one of the most mature and effective capacity expansion technologies for optical fiber communication. To carry more data, operating bands of optical fiber communication have been continuously expanded from the conventional C-band to C+L bands, C+L+S bands, and other applications. However, various nonlinear effects in such ultra-wideband Wavelength Division Multiplexing (WDM) systems are more complex and significant than those in conventional C-band system. SRS effect is the most common transmission damage in WDM systems.

The SRS effect induces the transfer of power from short-wavelength channels to long-wavelength channels, degrading the signal-to-noise ratio of long wavelength channels. Generally, to avoid wavelength conflicts, a service wavelength of an OTDR is usually configured at the shortest or longest wavelength of a service band of an OTN. Due to the impact of the SRS effect in the optical fiber during optical fiber transmission, if the OTDR wavelength is a short wavelength and serves as pump light, its own channel fading is more significant than that in a scenario without the SRS effect due to pump depletion; if the OTDR wavelength is a long wavelength and serves as signal light, its own channel fading is less significant than that in a scenario without the SRS effect due to the Raman transfer amount. Both the two cases cause a distortion of the trace measurement result of the OTDR, degrading the detection range/dynamic range and accuracy of the OTDR. In addition, the distortion of the trace measured by the OTDR exists regardless of whether the OTDR transmission direction is the same as the transmission direction of the OTN service, and only distortion characteristics slightly vary between the case where the OTDR transmission direction is the same as the transmission direction of the OTN service and the case where the OTDR transmission direction is different from the transmission direction of the OTN service.

It should be noted that a larger OTN service band indicates a larger Raman shift $\Omega$ and a more significant SRS effect. Because the pump depletion term and the Raman gain term may be combined by introducing a "plus" or "minus" sign, "pump depletion" and "Raman gain" can be collectively referred to as a Raman transfer amount in the present disclosure. The Raman transfer amount varies with the channel power distribution of the WDM system, so the Raman transfer amounts on different transmission sections of the optical fiber are different.

A description of a theoretical model of the SRS effect in a conventional method is as follows.

During simultaneous transmission of pump light and signal light in the optical fiber, the power of pump light cannot be kept as a constant, so nonlinear effects between pump light and signal light should be considered. When these effects are taken into account, they may be expressed by formula (1) below:

$$\begin{cases} \dfrac{dP_s}{dz} = g_R P_p P_s - \alpha_s P_s \\ \dfrac{dP_p}{dz} = -\dfrac{\omega_p}{\omega_s} g_R P_p P_s - \alpha_p P_p \end{cases} \quad (1)$$

$$-\frac{\omega_p}{\omega_s} g_R P_p P_s \quad (2)$$

where $g_R$ represents a Raman gain coefficient, $P_s$ represents power of the signal light, $P_P$ represents power of the pump light, $\alpha_P$ represents a fiber loss at the wavelength of the pump light, $\alpha_s$ represents a fiber loss at the wavelength of the signal light, $\omega_P$ represents the frequency of the pump light, $\omega_s$ represents the frequency of the signal light, and formula 2 is the pump loss term.

Using an OTN in C+L bands as an example, the OTDR is at a short wavelength of 1502 nm, i.e., $\omega_P$=199.73 THz, serving as pump light. The longest wavelength of the L-band is 1625.77 nm, i.e., $\omega_s$=184.53 THz, serving as one of signal light. Therefore, the ratio of $\omega_P$ to $\omega_s$ in formula (1) is approximately equal to 1. During solving of the coupled wave equation, the general practice is to ignore the pump loss term, i.e., the formula (2) part. As such, an analytical power distribution $P_P(z)$ of the pump light in the entire optical fiber can be obtained. $P_P(z)$ represents a power value of pump light at an optical fiber $z$. Then, power evolution of signal light on the optical fiber can be further obtained according to $P_P(z)$. The disadvantage of the above processing process is that under a strong SRS effect, as the transmission distance z increases, the calculated power $P_P(z)$ of the pump light is too large, and the error continues to accumulate.

To correct the OTDR trace distortion, it is necessary to accurately extract the Raman transfer amount from the distorted OTDR trace, and at least the following problems need to be solved.

(1) Conventional methods that ignore the pump loss term during solving of the SRS parameter decoupling equation are not applicable.

(2) Aging of the optical fiber with time should be correctly reflected in the OTDR trace, so the decoupling of fiber aging factor and the SRS effect needs to be solved.

(3) When the power distribution of the OTN service changes due to factors such as service scheduling, aging, and fading event points in the existing OTN, different Raman transfer amounts are caused. Therefore, different Raman transfer amounts need to be extracted for correction according to different power distributions.

In view of the above, the embodiments of the present disclosure provide an OTDR trace correction method, an electronic device, and a storage medium, to correct an OTDR trace, thereby improving the detection accuracy of an OTDR.

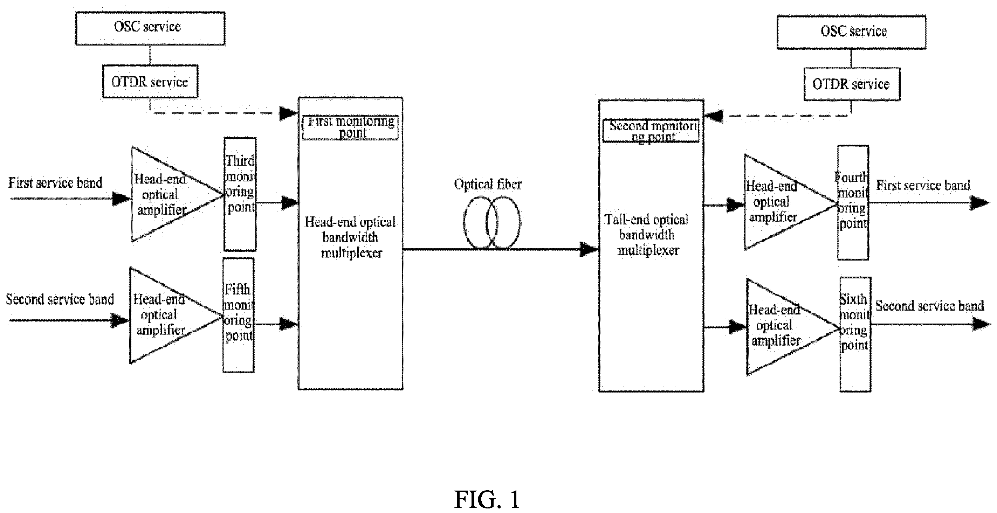

FIG. 1 is a schematic diagram of a layout configuration of an optical transport layer segment in an OTN according to an embodiment of the present disclosure, including a first monitoring point, a second monitoring point, a third monitoring point, a fourth monitoring point, a fifth monitoring point, and a sixth monitoring point. The first monitoring point and the second monitoring point are respectively arranged on an optical bandwidth multiplexer at a head end of the optical transport layer segment and an optical bandwidth multiplexer at a tail end of the optical transport layer segment. The third monitoring point and the fourth monitoring point are respectively arranged on a head-end optical amplifier of a first service band of the optical transport layer segment and a tail-end optical amplifier of the first service band of the optical transport layer segment. The fifth monitoring point and the sixth monitoring point are respectively arranged on a head-end optical amplifier of a second service band of the optical transport layer segment and a tail-end optical amplifier of the second service band of the optical transport layer segment.

It should be noted that the present disclosure is described using an example where the OTN has two service bands, e.g., a first service band which is the C-band and a second service band which is the L-band. In addition, in the present disclosure, a transport layer segment in the OTN, i.e., an optical transport layer segment, is used to describe the implementation process of the method of the present disclosure. In some other embodiments, other transport layer segments in the OTN may also be used, which is not particularly limited herein.

It should be noted that in some embodiments, after being mixed, a service wavelength of an OTDR and an Optical Supervisory Channel (OSC) service wavelength may enter the optical bandwidth multiplexer at the head end of the optical transport layer segment from left to right as shown in FIG. 1. In this case, the directions of service wavelengths of the first service band and the second service band are the same as the direction of the service wavelength of the OTDR. In some embodiments, after being mixed, a service wavelength of an OTDR and an OSC service wavelength may enter the optical bandwidth multiplexer at the tail end of the optical transport layer segment from right to left as shown in FIG. 1. In this case, the directions of service wavelengths of the first service band and the second service band are opposite to the direction of the service wavelength of the OTDR.

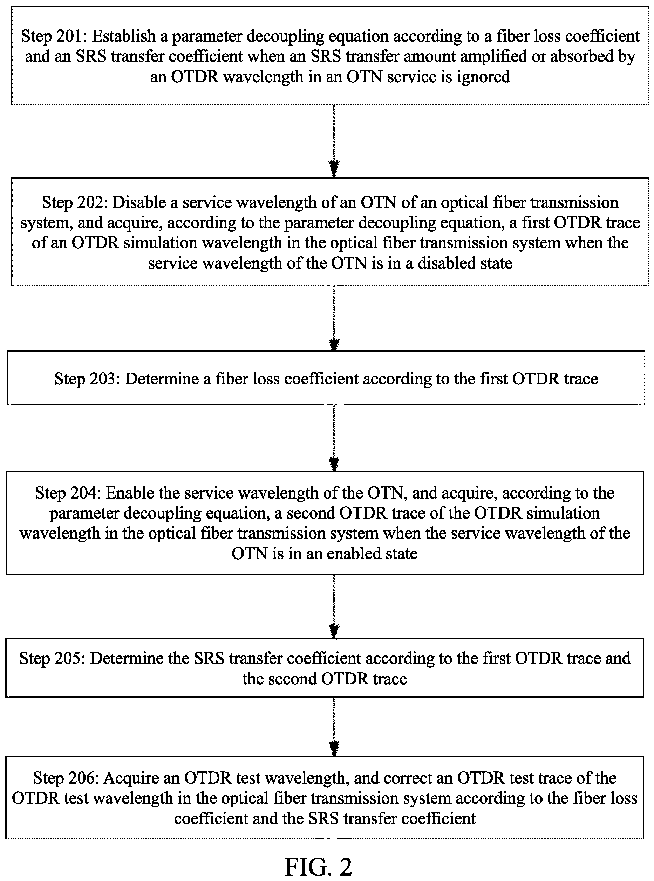

Based on the schematic diagram of the layout configuration in FIG. 1, FIG. 2 is a flowchart of an OTDR trace correction method according to an embodiment of the present disclosure. The method includes, but not limited to, the following steps 201 to 206.

At step 201, a parameter decoupling equation is established according to a fiber loss coefficient and an SRS transfer coefficient when an SRS transfer amount amplified or absorbed by an OTDR wavelength in an OTN service is ignored.

At step 202, a service wavelength of an OTN of an optical fiber transmission system is disabled, and a first OTDR trace of an OTDR simulation wavelength in the optical fiber transmission system when the service wavelength of the OTN is in a disabled state is acquired according to the parameter decoupling equation.

At step 203, a fiber loss coefficient is determined according to the first OTDR trace.

At step 204, the service wavelength of the OTN is enabled, and a second OTDR trace of the OTDR simulation wavelength in the optical fiber transmission system when the service wavelength of the OTN is in an enabled state is acquired according to the parameter decoupling equation.

At step 205, the SRS transfer coefficient is determined according to the first OTDR trace and the second OTDR trace.

At step 206, an OTDR test wavelength is acquired, and an OTDR test trace of the OTDR test wavelength in the optical fiber transmission system is corrected according to the fiber loss coefficient and the SRS transfer coefficient.

It should be noted that in the present disclosure, the obtained fiber loss coefficient and the SRS transfer coefficient are substituted into the preset parameter decoupling equation, so that the OTDR test trace measured according to the parameter decoupling equation is a corrected trace. Compared with conventional technologies, the present disclosure reduces the distortion of the OTDR test trace, thereby improving the accuracy of the optical fiber performance detection result of the OTDR.

It should be noted that the OTDR simulation wavelength and the OTDR test wavelength may be generated by artificially controlling the OTDR. In some embodiments, the frequency of the OTDR simulation wavelength is the same as the frequency of the OTDR test wavelength. In some embodiments, the frequency of the OTDR simulation wavelength and the frequency of the OTDR test wavelength are at a short wavelength of 198.4067 THz.

On the one hand, the present disclosure considers the problem that in practical application scenarios, fiber aging and fiber loss event points cause a change in fiber loss coefficients $\alpha_P$ and $\alpha_s$, which in turn leads to a change in the power of signal light and the power of pump light, eventually resulting in a change in the SRS transfer amount and distortion of the OTDR trace. On the other hand, when the OTDR wavelength is at the shortest wave (i.e., the OTDR wave is pump light), an SRS transfer amount of the OTN service wavelength caused by a single OTDR wavelength is very small and therefore can be ignored, i.e., $P_s$ in formula (1) may be expressed as $P_s = \alpha_s P_s(0)$. Therefore, by substituting $P_s = \alpha_s P_s(0)$ into formula (1), formula (3) can be obtained. In addition, considering a difference between the fiber loss $\alpha_s$ at the wavelength of the signal light and the fiber loss $\alpha_P$ at the wavelength of the pump light, the relationship between $\alpha_P$ and $\alpha_s$ may be expressed as $\alpha_s = k\alpha_P$. Therefore, formula (3) can be transformed to formula (4).

$$\frac{\mathrm{d}P_p}{\mathrm{d}z} = -g_R P_p P_s(0)\alpha_\mathrm{s} - \alpha_p P_p \quad (3)$$

$$\frac{\mathrm{d}P_p}{P_p} = \left[-\alpha_p(g_R k P_s(0)+1)\right]\mathrm{d}z \quad (4)$$

where on the right side of formula (4), $\alpha_P$ represents the fiber loss coefficient, and $(g_R k P_s(0)+1)$ represents the SRS transfer coefficient. Because the SRS transfer amount of the OTN service amplified or absorbed by the OTDR wavelength is ignored in the present disclosure, formula (4) realizes the decoupling of the fiber loss coefficient and the SRS transfer coefficient.

In addition, in the actual calculation process, an optical fiber with a total length of L may be discretized into $N$ optical fiber segments with a length of $\Delta L = L_n - L_{n-1}$, with each segment numbered as $n$, where n = 1, 2, 3, ..., n. Therefore, formula (4) can be written in a discrete form, i.e., expressed as formula (5).

$$\frac{P_p(L_n)-P_p(L_{n-1})}{P_p(L_n)}=\left[-\alpha_p(L_n)(g_R k P_s(0)+1)\right](L_n-L_{n-1}) \quad (5)$$

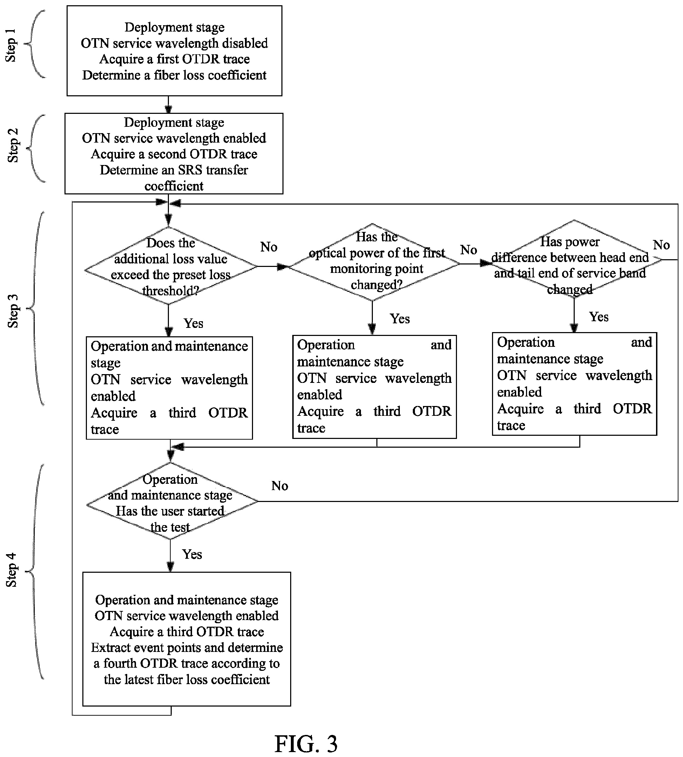

Referring to FIG. 3, the process for determining the fiber loss coefficient and the SRS transfer coefficient in the present disclosure is described through a specific embodiment.

Step 1: In a deployment stage, the OTN service wavelength is disabled, an OTDR pulse width $\tau$ is set to a maximum value to ensure that a maximum OTDR detection range is reached. A first OTDR trace is measured and stored. In this case, the SRS effect of the OTN service wavelength on the OTDR trace does not exist, so formula (4) can be transformed into formula (6). Formula (6) is a trace equation of the first OTDR trace. Then, the optical fiber is discretized, and formula (6) can be transformed into formula (7). $P_P^a(L_n)$ and $P_P^a(L_{n-1})$ on the left side of formula (7) and $L_n$ and $L_{n-1}$ on the right side of formula (7) can both be measured. Therefore, the fiber loss coefficient $\alpha_P$ can be determined based on formula (7). Then, the fiber loss coefficient $\alpha_P$ is stored in the OTDR.

$$\frac{dP_p^a}{P_p^a}=-\alpha_p dz \quad (6)$$

$$\frac{P_p^a(L_n)-P_p^a(L_{n-1})}{P_p^a(L_n)}=-\alpha_p(L_n)(L_n-L_{n-1}) \quad (7)$$

Step 2: In a deployment stage, the OTN service wavelength is enabled, and the OTDR pulse width $\tau$ is set to a maximum value to ensure that a maximum OTDR detection range is reached. A second OTDR trace is measured and stored. A trace equation of the second OTDR trace is formula (8). Then, the optical fiber is discretized, and formula (8) can be transformed into formula (9). Formula (10) can be obtained by combining formula (7) and formula (9). With reference to Step 1, $P_P^b(L_n)$ and $P_P^b(L_{n-1})$ can be measured. Therefore, the SRS transfer coefficient $(g_R k P_s(0)+1)$ can be determined based on formula (10). Then, the SRS transfer coefficient $(g_R k P_s(0)+1)$ is stored in the OTDR.

$$\frac{dP_p^b}{P_p^b}=\left[-\alpha_p(g_R k P_s(0)+1)\right]dz \quad (8)$$

$$\frac{P_p^b(L_n)-P_p^b(L_{n-1})}{P_p^b(L_n)}=-\alpha_p(L_n)(g_R k P_s(0)+1)(L_n-L_{n-1}) \quad (9)$$

$$\frac{P_p^b(L_n)-P_p^b(L_{n-1})}{P_p^b(L_n)}\bigg/\frac{P_p^a(L_n)-P_p^a(L_{n-1})}{P_p^a(L_n)}=\left[(g_R k P_s(0)+1)\right] \quad (10)$$

In an embodiment, the method further includes: acquiring optical power data of a plurality of optical power monitoring points preset on the OTN and determining according to the optical power data whether a service power distribution of the OTN in the optical fiber transmission system has changed; and updating the SRS transfer coefficient in response to a change in the service power distribution in the optical fiber transmission system.

In an embodiment, referring to FIG. 1, the optical power monitoring points include a first monitoring point, a second monitoring point, a third monitoring point, a fourth monitoring point, a fifth monitoring point, and a sixth monitoring point. The first monitoring point and the second monitoring point are respectively arranged on an optical bandwidth multiplexer at a head end of the OTN and an optical bandwidth multiplexer at a tail end of the OTN. The third monitoring point and the fourth monitoring point are respectively arranged on a head-end optical amplifier of a first service band of the OTN and a tail-end optical amplifier of the first service band of the OTN. The fifth monitoring point and the sixth monitoring point are respectively arranged on a head-end optical amplifier of a second service band of the OTN and a tail-end optical amplifier of the second service band of the OTN. Acquiring optical power data of a plurality of optical power monitoring points preset on the OTN and determining according to the optical power data whether a service power distribution of the OTN in the optical fiber transmission system has changed includes: periodically acquiring first monitoring data of the first monitoring point and second monitoring data of the second monitoring point, and determining an additional loss value of an optical fiber in a current period according to the first monitoring data and the second monitoring data; when the additional loss value is less than a preset loss threshold, determining whether the first monitoring data of the current period is different from the first monitoring data of a previous period; in response to the first monitoring data of the current period being different from the first monitoring data of the previous period, determining that the service power distribution has changed; in response to the first monitoring data of the current period having not changed, acquiring third monitoring data of the third monitoring point, fourth monitoring data of the fourth monitoring point, fifth monitoring data of the fifth monitoring point, and sixth monitoring data of the sixth monitoring point, determining a first data difference according to the third monitoring data and the fourth monitoring data, determining a second data difference according to the fifth monitoring data and the sixth monitoring data, determining whether the first data difference of the current period is different from the first data difference of the previous period, and determining whether the second data difference of the current period is different from the second data difference of the previous period; and in response to one of the first data difference of the current period and the second data difference of the current period having changed, determining that the service power distribution has changed.

In an embodiment, the method further includes: acquiring optical power data of a plurality of optical power monitoring points preset on the OTN and determining according to the optical power data whether a fiber loss exists in the optical fiber transmission system; and updating the fiber loss coefficient when a fiber loss exists in the optical fiber transmission system.

In an embodiment, the optical power monitoring points include a first monitoring point and a second monitoring point. The first monitoring point and the second monitoring point are respectively arranged on an optical bandwidth multiplexer at a head end of the OTN and an optical bandwidth multiplexer at a tail end of the OTN. Acquiring optical power data of a plurality of optical power monitoring points preset on the OTN and determining according to the optical power data whether a fiber loss exists in the optical fiber transmission system includes: periodically acquiring first monitoring data of the first monitoring point and second monitoring data of the second monitoring point, and determining an additional loss value of an optical fiber in a current period according to the first monitoring data and the second monitoring data; and when the additional loss value is greater than a preset loss threshold, determining that a fiber loss exists.

In an embodiment, the preset loss threshold is a product of an intrinsic loss value of the optical fiber and a preset number of times a threshold is exceeded, and when the additional loss value is greater than the preset loss threshold, the method further includes: updating the number of times the threshold is exceeded, and calculating a loss threshold according to the updated number of times the threshold is exceeded.

In an embodiment, updating the SRS transfer coefficient includes: acquiring, according to the parameter decoupling equation, a third OTDR trace of the OTDR simulation wavelength in the optical fiber transmission system when the service wavelength of the OTN is in the enabled state; determining an SRS transfer correction coefficient according to the first OTDR trace and the third OTDR trace; and updating the SRS transition coefficient according to the SRS transition correction coefficient.

In an embodiment, updating the fiber loss coefficient includes: acquiring, according to the parameter decoupling equation, a third OTDR trace of the OTDR simulation wavelength in the optical fiber transmission system when the service wavelength of the OTN is in the enabled state; determining a fiber loss correction coefficient according to the third OTDR trace and the SRS transfer coefficient; and updating the fiber loss coefficient according to the fiber loss correction coefficient.

In an embodiment, acquiring an OTDR test wavelength, and correcting an OTDR test trace of the OTDR test wavelength in the optical fiber transmission system according to the fiber loss coefficient and the SRS transfer coefficient includes: discretizing the optical fiber transmission system into a plurality of optical fiber segments; determining OTDR discrete traces corresponding to the OTDR test wavelength in the plurality of optical fiber segments according to the fiber loss coefficient and the SRS transfer coefficient; and performing interpolation processing and integration processing on the plurality of OTDR discrete traces to determine the OTDR test trace.

It should be noted that using formula (5) as an example, an upper limit of the value of the number $N$ of discrete optical fiber segments is determined by $(2L/v_g)f_s$, where $v_g$ represents a group velocity, and $f_s$ represents a sampling rate of an analog-to-digital converter (ADC) of an OTDR chip. A larger value of $N$ indicates higher correction precision and a larger detectable range of the corrected OTDR trace. However, due to the limited ADC sampling rate of OTDR products, an additional $K$-fold interpolation processing process is performed on the obtained OTDR discrete trace to raise the upper limit of $N$ to $K(2L/v_g)f_s$, and integration processing is performed on $K(2L/v_g)f_s$ OTDR discrete traces to obtain a final OTDR test trace. The use of interpolation to increase details helps improve the correction precision.

In an embodiment, after acquiring an OTDR test wavelength, and correcting an OTDR test trace of the OTDR test wavelength in the optical fiber transmission system according to the fiber loss coefficient and the SRS transfer coefficient, the method further includes: extracting reflection event points on the OTDR test trace; and loading the reflection event points onto the first OTDR trace to obtain a fourth OTDR trace.

Referring to FIG. 3, the process of determining whether the service power distribution of the OTN in the optical fiber transmission system has changed or whether a fiber loss exists in the optical fiber transmission system and a detailed process of correcting the OTDR trace in the present disclosure are described through a specific embodiment.

Step 3: In an operation and maintenance stage, referring to FIG. 1, the optical power data of the first monitoring point, the second monitoring point, the third monitoring point, the fourth monitoring point, the fifth monitoring point, and the sixth monitoring point are respectively represented by $P_{mon1}$, $P_{mon2}$, $P_{mon3}$, $P_{mon4}$, $P_{mon5}$, and $P_{mon6}$, the additional loss value of the optical fiber is $P_{mon1} - P_{mon2} - L_{inh}$, and the loss threshold is $u * L_{th}$, where $L_{inh}$ represents the intrinsic loss value of the optical fiber, and u represents the number of times the threshold is exceeded, and has a value of 1, 2, 3, .... The additional loss value is periodically calculated once per $h_1$ hours, and is compared with the preset loss threshold. The comparison result is as follows.

If the additional loss value is less than the preset loss threshold, it is checked whether power $P_{mon1}$ at the first monitoring point has changed. If the power at the first monitoring point has changed, an OTDR test is triggered, i.e., a third OTDR trace of the OTDR simulation wavelength in the optical fiber transmission system when the service wavelength of the OTN is in the enabled state is acquired according to the parameter decoupling equation, to overwrite the second OTDR trace, and the SRS transfer correction coefficient is determined according to the first OTDR trace and the third OTDR trace. For a specific calculation process, reference may be made to the description of the deployment stage of step 2. If the power at the first monitoring point has not changed, a power difference $P_{mon3} - P_{mon4}$ between the third monitoring point and the fourth monitoring point (i.e., a first data difference) and a power difference $P_{mon5} - P_{mon6}$ between the fifth monitoring point and the sixth monitoring point (i.e., a second data difference) are further respectively checked.

If one of the first data difference and the second data difference has changed, it indicates that the SRS transfer amount or the service power has changed. In this case, an OTDR test is triggered, i.e., a third OTDR trace of the OTDR simulation wavelength in the optical fiber transmission system when the service wavelength of the OTN is in the enabled state is acquired according to the parameter decoupling equation, to overwrite the second OTDR trace, and the SRS transfer correction coefficient is determined according to the first OTDR trace and the third OTDR trace. For a specific calculation process, reference may also be made to the description of the deployment stage of step 2.

If neither the first data difference nor the second data difference has changed, no additional calculation is needed, and wait for next detection.

If the additional loss value is greater than the preset loss threshold, it indicates that significant aging or an external loss event has occurred in the optical cable. In this case, on the one hand, an OTDR test is triggered, i.e., a third OTDR trace of the OTDR simulation wavelength in the optical fiber transmission system when the service wavelength of the OTN is in the enabled state is acquired according to the parameter decoupling equation. The fiber loss correction coefficient is determined according to the third OTDR trace and the SRS transfer coefficient. As shown in formula (11), the loss coefficient $\alpha_P$ is updated based on formula (11), and two sides of formula (11) are integrated or summed to overwrite the first OTDR trace. On the other hand, the number of times u the threshold is exceeded is updated, and the preset loss threshold is updated, such that the additional loss value is compared with the updated loss threshold in a next period.

$$\frac{P_p^{c\_com}(L_n) - P_p^{c\_com}(L_{n-1})}{P_p^{c\_com}(L_n)} = \frac{P_p^c(L_n) - P_p^c(L_{n-1})}{P_p^c(L_n)} / \left[ (g_R k P_s(0) + 1) \right] = -\alpha_p'(L_n)(L_n - L_{n-1}) \quad (11)$$

Step 4: If the user has not started an OTDR test, the process returns to step 3. If the user has started an OTDR test, an OTDR pulse width is set to $\tau1$, the test is performed according to formula (4), the updated fiber loss correction coefficient, and the SRS transfer correction coefficient to obtain an OTDR test trace, then reflection event points on the OTDR test trace are extracted and loaded onto the latest first OTDR trace to obtain a fourth OTDR trace. The fourth OTDR trace is a final corrected OTDR trace.

It should be noted that if the selected $\Delta L$ is too large, the compensation error for the Raman transfer amount increases; if the selected $\Delta L$ is too small, rising and falling edges of the event points introduce interference to the calculation of the loss coefficient and the SRS transfer coefficient. To solve the above problems, the following preprocessing may be performed after the OTDR test trace is obtained: 1. identifying the positions of the event points; 2. removing the event points by linear fitting to obtain a smooth OTDR test trace; and 3. loading the event points onto the latest first OTDR trace.

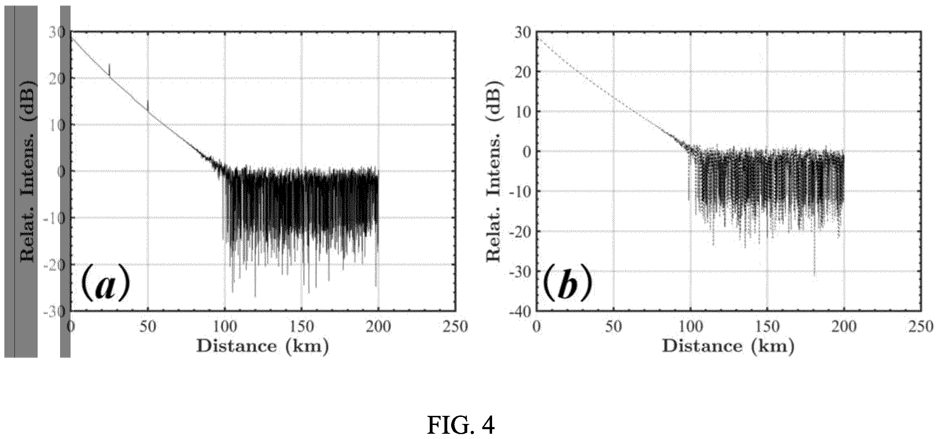

FIG. 4 is a schematic diagram of an OTDR trace before and after removal of event points.

The implementation process of the method of the present disclosure will be described below through specific embodiments.

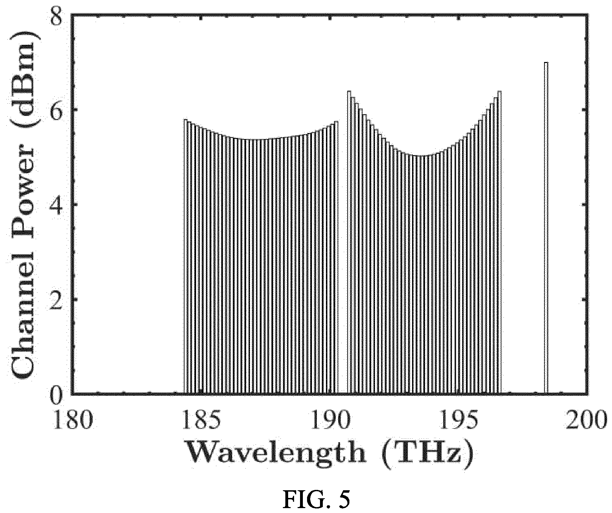

Embodiment one provides a method for correcting an OTDR test trace in a C+L band optical transmission system in a newly built network (without significant optical cable aging). As shown in FIG. 5, a channel power configuration of an OTN service in C+L bands is as follows: L-band: 184.4 THz to 190.25 THz, with a channel spacing of 150 GHz and a total of 40 waves; C-band: 190.75 THz to 196.6 THz, with a channel spacing of 150 GHz and a total of 40 waves. In this embodiment, the OTDR service is configured in the same direction as the OTN service in the C+L bands. The OTDR is at a short wavelength of 198.4067 THz with a peak power of +7 dBm. Other scenarios, such as that where the OTDR service and the OTN service are in opposite directions, that where the OTDR is at a long wavelength relative to the OTN service, and other arrangement and combination forms, will not be described in detail in this embodiment, and only the scenario where the OTDR is at a short wavelength and the OTDR service is in the same direction as the OTN service is used as an example. A G 652.D optical fiber with an average loss of 0.1998 dB/km is used. The SRS effect of this system is strong, and the OTDR trace of this system is corrected in the following manner.

Step 1: In a deployment stage, the OTN service wavelength is disabled, a first OTDR trace is measured and stored, and 4-fold interpolation processing is performed. After event points are removed, the loss coefficient $\alpha_P$ is calculated and stored.

Step 2: In a deployment stage, the OTN service wavelength is enabled, a second OTDR trace is measured and stored, and 4-fold interpolation processing is performed. After event points are removed, the SRS transfer coefficient is calculated and stored.

Step 3: In an operation and maintenance stage, the optical bandwidth multiplexer detects the additional loss value of the optical fiber in the optical transport layer segment once per 10 minutes. Because the network is newly built and there is no aging or additional loss of the optical cable, the degree of aging of the optical fiber in the optical transport layer segment detected by the optical bandwidth multiplexer is less than the preset loss threshold. In some embodiments, a first power difference between C-band optical amplifiers and a second power difference between L-band optical amplifiers at the head end and the tail end of the optical transport layer segment are respectively checked, and it is found that both the first power difference and the second power difference are stable and remain unchanged, so the loss coefficient $\alpha_P$ and the SRS transfer coefficient do not need to be updated.

Step 4: In an operation and maintenance stage, the user starts an OTDR test, an OTDR test trace is acquired, and 4-fold interpolation processing is performed. Event points are extracted and loaded onto the first OTDR trace to obtain a fourth OTDR trace, which is a final corrected trace.

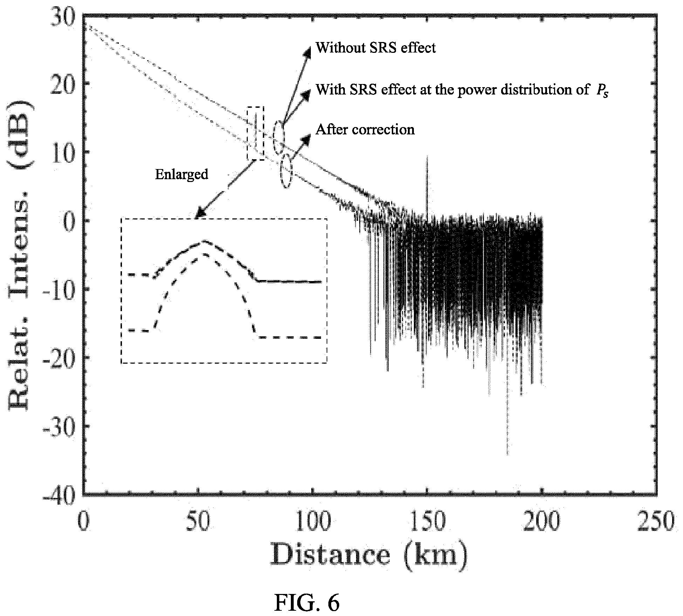

As shown in FIG. 6, the SRS effect is significant in the front section of the optical cable when the OTDR service is configured in the same direction as the OTN service. It can be seen from the figure that the loss of the OTDR trace in a scenario with the SRS effect is significantly greater than that in a scenario without the SRS effect. The corrected OTDR trace obtained through processing using the method in Embodiment one of the present disclosure almost coincides with the OTDR trace obtained in the scenario without the SRS effect, indicating a satisfactory correction effect. It can also be seen from the figure that the detection range (dynamic range) of the OTDR is significantly improved after the correction. Therefore, the method can achieve the objective of the present disclosure.

Embodiment two provides a method for correcting an OTDR test trace in an optical transmission system in a scenario where an OTN service in the C+L bands is performed over an optical cable with significant aging. As shown in FIG. 5, a channel power configuration of an OTN service in C+L bands is as follows: L-band: 184.4 THz to 190.25 THz, with a channel spacing of 150 GHz and a total of 40 waves; C-band: 190.75 THz to 196.6 THz, with a channel spacing of 150 GHz and a total of 40 waves. In this embodiment, the OTDR service is configured in the same direction as the OTN service in the C+L bands. The OTDR is at a short wavelength of 198.4067 THz with a peak power of +7 dBm. Other scenarios, such as that where the OTDR service and the OTN service are in opposite directions, that where the OTDR is at a long wavelength relative to the OTN service, and other arrangement and combination forms, will not be described in detail in this embodiment, and only the scenario where the OTDR is at a short wavelength and the OTDR service is in the same direction as the OTN service is used as an example. A G 652.D optical fiber with an average loss of 0.1998 dB/km is used. After aging, the average loss of the optical cable reaches 0.3 dB/km (reflected by the slope of the OTDR trace). The OTDR trace of this system may be corrected in the following manner.

Step 1: In a deployment stage, the OTN service wavelength is disabled, a first OTDR trace is measured and stored, and 4-fold interpolation processing is performed. After event points are removed, the loss coefficient $\alpha_P$ is calculated and stored.

Step 2: In a deployment stage, the OTN service wavelength is enabled, a second OTDR trace is measured and stored, and 4-fold interpolation processing is performed. After event points are removed, the SRS transfer coefficient is calculated and stored.

Step 3: In an operation and maintenance stage, the optical bandwidth multiplexer detects the additional loss value of the optical fiber in the optical transport layer segment once per 10 minutes. Because there is no aging of the optical cable when the network is newly built, the degree of aging of the optical fiber in the optical transport layer segment detected by the optical bandwidth multiplexer is less than the preset loss threshold, i.e., the additional loss value is less than the preset loss threshold. Further, it is checked that the power $P_{mon1}$ at the first monitoring point on an optical bandwidth multiplexer at a head segment has not changed. Then, a first power difference between C-band optical amplifiers and a second power difference between L-band optical amplifiers at the head end and the tail end of the optical transport layer segment are respectively checked. It is found that the first power difference in the C-band has increased and the second power difference in the L-band has decreased, indicating that the power distribution has changed. In this case, an OTDR test is triggered to obtain a third OTDR trace to overwrite the second OTDR trace, and the SRS transfer coefficient is corrected according to formula (10). In this embodiment, because the network has been built for a long time and there is aging and additional loss of the optical cable, the additional loss value in the optical transport layer segment detected by the optical bandwidth multiplexer is greater than the preset loss threshold, indicating that significant aging or an external loss event has occurred in the optical cable. In this case, the number of times the threshold is exceeded is updated, and an OTDR test is triggered to obtain the third OTDR trace. In this case, because the SRS correction term has been updated before, the current latest SRS correction item is directly used, the SRS transfer amount is removed, the loss coefficient $\alpha_P$ is calculated and updated, and the third OTDR trace is used to overwrite the first OTDR trace.

Step 4: In an operation and maintenance stage, the user starts an OTDR test, an OTDR test trace is acquired, and 4-fold interpolation processing is performed. Event points are extracted and loaded onto the first OTDR trace to obtain a fourth OTDR trace, which is a final corrected trace.

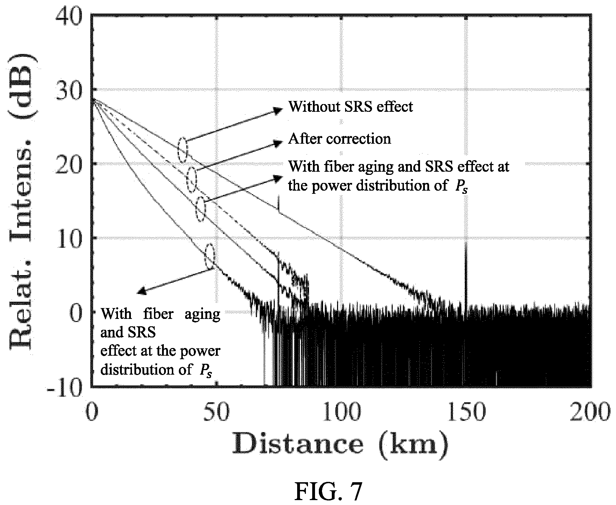

As shown in FIG. 7, when the OTDR service is configured in the same direction as the OTN service, there are two cases. In case 1, when the optical cable has aged and the OTN service power is $P_s$, the front segment of the trace is distorted by the SRS effect, and the back segment of the trace is not parallel to the original trace (indicating that aging has occurred). In case 2, when the optical cable has aged and the OTN service power is increased to $P_s'$, the front segment of the trace is more significantly affected by the SRS effect and experiences a greater loss, and the back segment of the trace is not parallel to the original trace (indicating that aging has occurred). It can be seen from the corrected traces obtained by the method of the present disclosure that regardless of whether the power of the OTN service changes, because the SRS transfer amount is removed, the two corrected traces almost coincide with an OTDR trace obtained by testing an optical cable with aging only, indicating a satisfactory correction effect. It can also be seen from the figure that the detection range (dynamic range) of the OTDR is significantly improved after the correction. Therefore, the method can achieve the objective of the present disclosure.

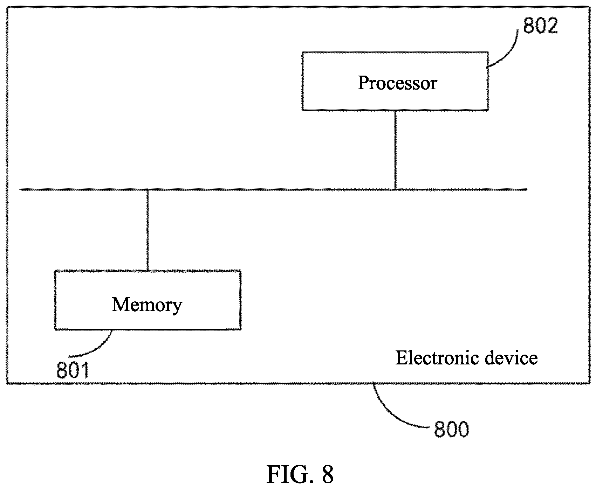

FIG. 8 is a schematic structural diagram of a terminal according to an embodiment of the present disclosure. The terminal 800 includes a memory 801, a processor 802, and a computer program stored in the memory 801 and executable by the processor 802. The computer program, when executed by the processor 802, causes the processor 802 to implement the method described above.

The processor 802 and the memory 801 may be connected by a bus or in other ways.

The memory 801, as a non-transitory computer-readable storage medium, may be configured for storing a non-transitory software program and a non-transitory computer-executable program, for example, the method described in the embodiments of the present disclosure. The processor 802 runs the non-transitory software program and the non-transitory computer-executable program stored in the memory 801, to implement the method described above.

The memory 801 may include a program storage area and a data storage area. The program storage area may store an operating system, and an application required by at least one function. The data storage area may store data and the like required for executing the method described above. In addition, the memory 801 may include a high-speed random access memory, and may also include a non-transitory memory, e.g., at least one magnetic disk storage device, flash memory device, or other non-transitory solid-state storage device. In some implementations, the memory 801 may include memories located remotely from the processor 802, and the remote memories may be connected to the terminal 800 via a network. Examples of the network include, but not limited to, the Internet, an intranet, a local area network, a mobile communication network, and combinations thereof.

The non-transitory software program and instructions required to implement the method described above are stored in the memory 801 which, when executed by one or more processors 802, cause the one or more processors 802 to implement the method described above.

An embodiment of the present disclosure provides a computer-readable storage medium, storing a computer-executable instruction which, when executed by a processor, causes the processor to implement the method described above.

In an embodiment, the computer-readable storage medium stores a computer-executable instruction which, when executed by one or more control processors, may cause the one or more control processors to implement the method described above.

The embodiments of the present disclosure have the following beneficial effects. By establishing a parameter decoupling equation according to a fiber loss coefficient and an SRS transfer coefficient when an SRS transfer amount amplified or absorbed by an OTDR wavelength in an OTN service is ignored; disabling a service wavelength of an OTN of an optical fiber transmission system, and acquiring, according to the parameter decoupling equation, a first OTDR trace of an OTDR simulation wavelength in the optical fiber transmission system when the service wavelength of the OTN is in a disabled state; determining a fiber loss coefficient according to the first OTDR trace; enabling the service wavelength of the OTN, and acquiring, according to the parameter decoupling equation, a second OTDR trace of the OTDR simulation wavelength in the optical fiber transmission system when the service wavelength of the OTN is in an enabled state; determining the SRS transfer coefficient according to the first OTDR trace and the second OTDR trace; and acquiring an OTDR test wavelength, and correcting an OTDR test trace of the OTDR test wavelength in the optical fiber transmission system according to the fiber loss coefficient and the SRS transfer coefficient. In the present disclosure, because the parameter decoupling of the fiber loss coefficient and the SRS transfer coefficient is realized and specific values of the fiber loss coefficient and the SRS transfer coefficient are determined, the OTDR test trace obtained using the parameter decoupling equation according to the determined fiber loss coefficient and the SRS transfer coefficient is a trace in which the distortion caused by the SRS effect has been corrected. Therefore, the present disclosure can improve the detection accuracy of the OTDR in complex scenarios such as that involving optical cable aging, a change of the power distribution of the OTN service, and connection of different optical cables.

The apparatus embodiments described above are merely examples. The units described as separate components may or may not be physically separated, i.e., they may be located in one place or may be distributed over a plurality of network units. Some or all of the modules may be selected according to actual needs to achieve the objects of the scheme of this embodiment.

Those having ordinary skills in the art can understand that all or some of the steps in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a digital versatile disc (DVD) or other optical storage, a cassette, a magnetic tape, a magnetic disk storage or other magnetic storage device, or any other medium which can be used to store the desired information and can be accessed by a computer. In addition, as is known to those having ordinary skills in the art, the communication medium typically includes computer-readable instructions, data structures, program modules, or other data in a modulated data signal such as a carrier or other transport mechanism, and can include any information delivery medium.

It should also be understood that the various implementations provided by the embodiments of the present disclosure may be arbitrarily combined to achieve different technical effects.

Although some embodiments of the present disclosure have been described above, the present disclosure is not limited thereto. Those having ordinary skills in the art can make various equivalent modifications or replacements without departing from the essence of the present disclosure. Such equivalent modifications or replacements fall within the scope defined by the claims of the present disclosure.

## Claims

1. An Optical Time-Domain Reflectometer (OTDR) trace correction method, comprising:

     establishing a parameter decoupling equation according to a fiber loss coefficient and a Stimulated Raman Scattering (SRS) transfer coefficient in response to ignoring an SRS transfer amount amplified or absorbed by an OTDR wavelength in an Optical Transport Network (OTN) service;
     disabling a service wavelength of an OTN of an optical fiber transmission system, and acquiring, according to the parameter decoupling equation, a first OTDR trace of an OTDR simulation wavelength in the optical fiber transmission system when the service wavelength of the OTN is in a disabled state;
     determining a fiber loss coefficient according to the first OTDR trace;
     enabling the service wavelength of the OTN, and acquiring, according to the parameter decoupling equation, a second OTDR trace of the OTDR simulation wavelength in the optical fiber transmission system when the service wavelength of the OTN is in an enabled state;

determining the SRS transfer coefficient according to the first OTDR trace and the second OTDR trace; and acquiring an OTDR test wavelength, and correcting an OTDR test trace of the OTDR test wavelength in the optical fiber transmission system according to the fiber loss coefficient and the SRS transfer coefficient.

2. The method of claim 1, wherein before acquiring an OTDR test wavelength, the method further comprises:

acquiring optical power data of a plurality of optical power monitoring points preset on the OTN and determining according to the optical power data whether a service power distribution of the OTN in the optical fiber transmission system has changed; and
updating the SRS transfer coefficient in response to a change in the service power distribution in the optical fiber transmission system.

3. The method of claim 2, wherein the optical power monitoring points comprise a first monitoring point, a second monitoring point, a third monitoring point, a fourth monitoring point, a fifth monitoring point, and a sixth monitoring point, wherein the first monitoring point and the second monitoring point are respectively arranged on an optical bandwidth multiplexer at a head end of the OTN and an optical bandwidth multiplexer at a tail end of the OTN, the third monitoring point and the fourth monitoring point are respectively arranged on a head-end optical amplifier of a first service band of the OTN and a tail-end optical amplifier of the first service band of the OTN, the fifth monitoring point and the sixth monitoring point are respectively arranged on a head-end optical amplifier of a second service band of the OTN and a tail-end optical amplifier of the second service band of the OTN, and acquiring optical power data of a plurality of optical power monitoring points preset on the OTN and determining according to the optical power data whether a service power distribution of the OTN in the optical fiber transmission system has changed comprises:

periodically acquiring first monitoring data of the first monitoring point and second monitoring data of the second monitoring point, and determining an additional loss value of an optical fiber in a current period according to the first monitoring data and the second monitoring data;
in response to the additional loss value being less than a preset loss threshold, determining whether the first monitoring data of the current period is different from the first monitoring data of a previous period;
in response to the first monitoring data of the current period being different from the first monitoring data of the previous period, determining that the service power distribution has changed;
in response to the first monitoring data of the current period having not changed, acquiring third monitoring data of the third monitoring point, fourth monitoring data of the fourth monitoring point, fifth monitoring data of the fifth monitoring point, and sixth monitoring data of the sixth monitoring point, determining a first data difference according to the third monitoring data and the fourth monitoring data, determining a second data difference according to the fifth monitoring data and the sixth monitoring data, determining whether the first data difference of the current period is different from the first data difference of the previous period, and determining whether the second data difference of the current period is different from the second data difference of the previous period; and
in response to one of the first data difference of the current period and the second data difference of the current period having changed, determining that the service power distribution has changed.

4. The method of claim 2, wherein updating the SRS transfer coefficient comprises:

acquiring, according to the parameter decoupling equation, a third OTDR trace of the OTDR simulation wavelength in the optical fiber transmission system when the service wavelength of the OTN is in the enabled state;
determining an SRS transfer correction coefficient according to the first OTDR trace and the third OTDR trace; and
updating the SRS transition coefficient according to the SRS transition correction coefficient.

5. The method of claim 1, wherein before acquiring an OTDR test wavelength, the method further comprises:

acquiring optical power data of a plurality of optical power monitoring points preset on the OTN and determining according to the optical power data whether a fiber loss exists in the optical fiber transmission system; and
updating the fiber loss coefficient in response to existence of a fiber loss in the optical fiber transmission system.

6. The method of claim 5, wherein the optical power monitoring points comprise a first monitoring point and a second monitoring point, the first monitoring point and the second monitoring point are respectively arranged on an optical bandwidth multiplexer at a head end of the OTN and an optical bandwidth multiplexer at a tail end of the OTN, and acquiring optical power data of a plurality of optical power monitoring points preset on the OTN and determining according to the optical power data whether a fiber loss exists in the optical fiber transmission system comprises:

> periodically acquiring first monitoring data of the first monitoring point and second monitoring data of the second monitoring point, and determining an additional loss value of an optical fiber in a current period according to the first monitoring data and the second monitoring data; and
> in response to the additional loss value being greater than a preset loss threshold, determining that a fiber loss exists.

7. The method of claim 6, wherein the preset loss threshold is a product of an intrinsic loss value of the optical fiber and a preset number of times a threshold is exceeded, and in response to the additional loss value being greater than the preset loss threshold, the method further comprises:
updating the number of times the threshold is exceeded, and calculating a loss threshold according to the updated number of times the threshold is exceeded.

8. The method of claim 5, wherein updating the fiber loss coefficient comprises:

> acquiring, according to the parameter decoupling equation, a third OTDR trace of the OTDR simulation wavelength in the optical fiber transmission system when the service wavelength of the OTN is in the enabled state;
> determining a fiber loss correction coefficient according to the third OTDR trace and the SRS transfer coefficient; and
> updating the fiber loss coefficient according to the fiber loss correction coefficient.

9. The method of claim 1, wherein acquiring an OTDR test wavelength, and correcting an OTDR test trace of the OTDR test wavelength in the optical fiber transmission system according to the fiber loss coefficient and the SRS transfer coefficient comprises:

> discretizing the optical fiber transmission system into a plurality of optical fiber segments;
> determining OTDR discrete traces corresponding to the OTDR test wavelength in the plurality of optical fiber segments according to the fiber loss coefficient and the SRS transfer coefficient; and
> performing interpolation processing and integration processing on the plurality of OTDR discrete traces to determine the OTDR test trace.

10. The method of claim 1, wherein after acquiring an OTDR test wavelength, and correcting an OTDR test trace of the OTDR test wavelength in the optical fiber transmission system according to the fiber loss coefficient and the SRS transfer coefficient, the method further comprises:

> extracting reflection event points on the OTDR test trace; and
> loading the reflection event points onto the first OTDR trace to obtain a fourth OTDR trace.

11. An electronic device, comprising a memory and a processor, wherein the memory is configured for storing a computer program which, when executed by the processor, causes the processor to perform the method of any one of claims 1 to 10.

12. A computer-readable storage medium, storing a program which, when executed by a processor, causes the processor to perform the method of any one of claims 1 to 10.

FIG. 1

Step 201: Establish a parameter decoupling equation according to a fiber loss coefficient and an SRS transfer coefficient when an SRS transfer amount amplified or absorbed by an OTDR wavelength in an OTN service is ignored

Step 202: Disable a service wavelength of an OTN of an optical fiber transmission system, and acquire, according to the parameter decoupling equation, a first OTDR trace of an OTDR simulation wavelength in the optical fiber transmission system when the service wavelength of the OTN is in a disabled state

Step 203: Determine a fiber loss coefficient according to the first OTDR trace

Step 204: Enable the service wavelength of the OTN, and acquire, according to the parameter decoupling equation, a second OTDR trace of the OTDR simulation wavelength in the optical fiber transmission system when the service wavelength of the OTN is in an enabled state

Step 205: Determine the SRS transfer coefficient according to the first OTDR trace and the second OTDR trace

Step 206: Acquire an OTDR test wavelength, and correct an OTDR test trace of the OTDR test wavelength in the optical fiber transmission system according to the fiber loss coefficient and the SRS transfer coefficient

FIG. 2

**Step 1**
Deployment stage
OTN service wavelength disabled
Acquire a first OTDR trace
Determine a fiber loss coefficient

**Step 2**
Deployment stage
OTN service wavelength enabled
Acquire a second OTDR trace
Determine an SRS transfer
coefficient

**Step 3**

Does the additional loss value exceed the preset loss threshold? — No → Has the optical power of the first monitoring point changed? — No → Has power difference between head end and tail end of service band changed — No →

Yes ↓

Operation and maintenance stage
OTN service wavelength enabled
Acquire a third OTDR trace

Yes ↓

Operation and maintenance stage
OTN service wavelength enabled
Acquire a third OTDR trace

Yes ↓

Operation and maintenance stage
OTN service wavelength enabled
Acquire a third OTDR trace

Operation and maintenance stage Has the user started the test — No →

Yes ↓

**Step 4**

Operation and maintenance stage
OTN service wavelength enabled
Acquire a third OTDR trace
Extract event points and determine
a fourth OTDR trace according to
the latest fiber loss coefficient

## FIG. 3

FIG. 4

FIG. 5

FIG. 6

FIG. 7

FIG. 8

## INTERNATIONAL SEARCH REPORT

| | |
|---|---|
| International application No. | |
| | **PCT/CN2023/093571** |

**A. CLASSIFICATION OF SUBJECT MATTER**

H04B10/25(2013.01)i

According to International Patent Classification (IPC) or to both national classification and IPC

**B. FIELDS SEARCHED**

Minimum documentation searched (classification system followed by classification symbols)

IPC: H04B, H04L, H04W

Documentation searched other than minimum documentation to the extent that such documents are included in the fields searched

Electronic data base consulted during the international search (name of data base and, where practicable, search terms used)

CNTXT, ENTXT, VEN: 光时域反射仪, 迹线, 修正, 受激拉曼散射, 光纤损耗, 关闭, 开启, 转移; OTDR, trace, correction, SRS, fiber loss, off, on, transfer

**C. DOCUMENTS CONSIDERED TO BE RELEVANT**

| Category* | Citation of document, with indication, where appropriate, of the relevant passages | Relevant to claim No. |
|---|---|---|
| A | CN 110023732 A (XIEON NETWORKS S.A.R.L) 16 July 2019 (2019-07-16) abstract, and description, paragraphs 73-144 | 1-12 |
| A | CN 109004973 A (GUANGZHOU GRG METROLOGY & TEST CO., LTD.) 14 December 2018 (2018-12-14) entire document | 1-12 |
| A | CN 110149143 A (GUANGDONG XINTONG COMMUNICATION CO., LTD.) 20 August 2019 (2019-08-20) entire document | 1-12 |
| A | US 2016072576 A1 (CIENA CORPORATION) 10 March 2016 (2016-03-10) entire document | 1-12 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **25 July 2023** | **01 August 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/093571**

| Patent document cited in search report | | | Publication date (day/month/year) | Patent family member(s) | | | Publication date (day/month/year) |
|---|---|---|---|---|---|---|---|
| CN | 110023732 | A | 16 July 2019 | WO | 2018095883 | A1 | 31 May 2018 |
| | | | | EP | 3324169 | A1 | 23 May 2018 |
| | | | | US | 2020049587 | A1 | 13 February 2020 |
| | | | | EP | 3545278 | A1 | 02 October 2019 |
| CN | 109004973 | A | 14 December 2018 | | None | | |
| CN | 110149143 | A | 20 August 2019 | | None | | |
| US | 2016072576 | A1 | 10 March 2016 | EP | 2993806 | A1 | 09 March 2016 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210758268